# EUROPÄISCHE PATENTSCHRIFT

(11) **EP 2 783 232 B1**
(45) Veröffentlichungstag und Bekanntmachung des Hinweises auf die Patenterteilung: **14.09.2016**
(21) Anmeldenummer: 12787464.2
(22) Anmeldetag: 20.11.2012
(51) Int. Cl.: G01S 7/486, G01S 7/497

(54) **VERFAHREN UND MESSSYSTEM ZUR ABSTANDSMESSUNG MITTELS DER LAUFZEIT VON KOMPENSIERTEN IMPULSEN**
DEVICE AND SENSOR FOR DISTANCE MEASUREMENT USING THE DURATION OF COMPENSATED PULSES
DISPOSITIF ET CAPTEUR DE MESURE D'ÉLOIGNEMENT À L'AIDE DE LA DURÉE DE FONCTIONNEMENT D'IMPULSIONS COMPENSÉES

(30) Priorität: 22.11.2011 EP 11190185
(43) Veröffentlichungstag der Anmeldung: 01.10.2014
(73) Patentinhaber: Elmos Semiconductor Aktiengesellschaft, 44227 Dortmund (DE)
(72) Erfinder: BURCHARD, Bernd, 45276 Essen (DE); BERGMANN, Joachim, 58640 Iserlohn (DE)
(74) Vertreter: Durm & Partner
(86) Internationale Anmeldenummer: PCT/EP2012/073109
(87) Internationale Veröffentlichungsnummer: WO 2013/076079

(56) Entgegenhaltungen:
- EP-A1- 2 159 600
- EP-B1- 1 913 420
- DE-A1- 10 001 955
- DE-A1- 10 211 307

## Beschreibung

Die Erfindung betrifft ein Verfahren und eine Vorrichtung zur Lichtlaufzeitmessung, insbesondere für Abstandsmessungen. Eine Abstandsmessung ist beispielsweise in EP 2 159 600 A1 oder in EP 1913420 B1 offenbart. Einige der folgenden Abschnitte, die die allgemeine Problematik betreffen, sind der EP 1913420 B1 in wesentlichen Teilen entnommen ohne dass, wie im Folgenden erläutert wird, die hier beschriebene Erfindung durch EP 1913420 B1 vorweggenommen wird.

In vielen Anwendungsbereichen muss die Entfernung eines Bezugsobjektes zu anderen Objekten bestimmt werden. Ein derartiger Einsatzbereich sind vor allem Abstandsmesssysteme, beispielsweise auch im Fahrzeugbereich, im Bereich der Robotik oder der Automatisierungstechnik.

Wie in EP 1913420 B1 beschrieben, ergibt sich folgende Problematik: Legt man an eine Leuchtdiode eine getaktete Spannung an, so leuchtet sie im Rhythmus dieser angelegten Spannung. Ein reflektierender Gegenstand kann die abgestrahlte Lichtleistung zu einer Photodiode vorzugsweise in der Nähe der sendenden LED reflektieren. Das zurückgeworfene Signal ist in seiner Größe abhängig von der Sendeleistung der LED, dem Reflexionsgrad des Gegenstandes und dem Abstand des Gegenstandes von der sendenden LED. Die typische Größenordnung eines Photostroms liegt im Bereich von einigen µA bis pA in der Photodiode.

Dieser Photostrom ist proportional zum inversen der vierten Potenz des Abstands vom reflektierenden Gegenstand. Bei Entfernungen von größer einem Meter kann daher - bei einer Ansteuerung wie EP 1913420 B1 beschrieben - dieser Photostrom möglicherweise nur noch einige pA betragen. Um die Entfernung des reflektierenden Gegenstandes zu messen, bietet sich zwar eine Laufzeitmessung zwischen gesendetem und empfangenem Signal an, jedoch ist es bei den oben genannten sehr kleinen Empfangsströmen in der Photodiode sehr schwierig, den genauen Eintreffpunkt zu ermitteln. Bei noch größeren Abständen wird diese Aufgabe nahezu unmöglich.

Erschwerend kommt laut EP 1913420 B1 hinzu, dass das eintreffende Signal in der Photodiode bzw. den angeschlossenen Verstärkern nicht die Flankensteilheit erzeugt, mit der es ausgesandt wurde. Praktisch jeder Photodetektor, insbesondere eine Photodiode, wirkt als Tiefpass. Zur Vereinfachung wird für die folgenden Abschnitte angenommen, dass dieses Verhalten durch ein Tiefpassmodell erster Ordnung angenähert werden kann.

Eine weitere gegenläufige Anforderung ist eine hohe Photonenausbeute des Photodetektors. Eine einfache Möglichkeit zur Steigerung dieser Ausbeute ist die Vergrößerung der Fläche, was aber wieder eine Verlangsamung des Photodetektors, also eine Verstärkung des Tiefpasscharakters zur Folge hat.

Um 15 cm Abstände, was einer Lichtstrecke von 30 cm entspricht, auflösen zu können, müssen Laufzeiten von 1ns aufgelöst werden können. Aufgrund des Tiefpassverhaltens der oben genannten Photodiode und des Vorverstärkers kann die Anstiegszeit des Empfangssignals durchaus 10 ps betragen. Auch die sendende LED hat eine merkliche Anstiegszeit, jedoch liegt sie typischerweise um Größenordnungen unter dem Tiefpassverhalten der Empfangs-Photodioden. Übliche Werte liegen im Bereich von 5 bis 10 ns. Das Detektieren des genauen Eintreffzeitpunktes des Reflexionssignals bereitet somit erhebliche Schwierigkeiten.

Allgemein ist bekannt, dass eine Messung ab ca. 3 m bis 250 m bei gleicher relativer Genauigkeit einfacher ist, als eine Messung im Nahfeld von 0 m bis 3 m, bei der mit ns-Genauigkeit gemessen werden muss, was normalerweise wiederum Photodioden und Verstärker im GHz-Bereich nötig macht. Erschwerend kommen noch Fremdlicht, Temperatur und der jeweilige Reflexionsgrad des zu messenden Objekts hinzu. Diese Parameter gehen in der Regel stark in die Entfernungsmessung ein.

In der Praxis werden aber oft ganz erhebliche Sendeleistungen (z.B. Laser, kurzzeitig gepulst 10 W) eingesetzt. EP 1913420 B1 beschreibt ein Verfahren vorzugsweise für die Nahfeldmessung, bei dem solche gepulsten Laser und LEDs für die Fernfeldmessung nicht zum Einsatz kommen können, da EP 1913420 B1 von einem getakteten Sendesignal ausgeht, dessen aktive Sendephasen lang genug sind, um in mindestens zwei Taktphasen geteilt werden zu können. In der zweiten Taktphase wird bei der in EP 1913420 B1 beschriebenen Methode die Amplitude des reflektierten Signals gemessen und die Kompensation durch die Bestrahlung mit einer zweiten Leuchtdiode nachgeregelt. Die Messung erfolgt in der Art, dass das Empfängersignal mit dem Sendesignal und dem Taktpuls der zweiten Taktphase multipliziert und dann gefiltert wird. Hierbei werden alle Empfangssignalkomponenten, die nicht synchron zum einmultiplizierten Signal sind, durch die Filterung unterdrückt.

In der ersten Taktphase wird die Phasenlage des reflektierten zum gesendeten Signal erfasst und die Phasenlage des Kompensationssignals so nachgeregelt, dass in Summe am Sensor ein Gleichsignal anliegt. Die Messung erfolgt in der Art, dass das Empfängersignal mit dem Sendesignal und dem Taktpuls der ersten Taktphase multipliziert und dann gefiltert wird. Alle Empfangssignalkomponenten, die nicht synchron zum einmultiplizierten Signal sind, werden wieder durch die Filterung unterdrückt.

Diese Regelung durch Zuhilfenahme zweier Taktphasen ist bei sehr kurz, aber leistungsstark gepulsten Lasern oder LEDs für die Sendediode nicht mehr möglich. Hierauf wird im Folgenden noch weiter eingegangen werden.

Wie aus EP 1913420 B1 bekannt, tritt ein weiterer ungewollter Effekt auf, wenn der Zeitpunkt des Empfangssignals genau bestimmt wäre. Zusätzliches Fremdlicht in der Photodiode verändert etwas die Amplitude und die Anstiegszeit des Empfangssignals, sodass auch die Entfernungsmessung durch Fremdlicht beeinflusst werden kann.

Eine Möglichkeit zur Entfernungsmessung ist die Messung der Lichtlaufzeit zwischen einem Lichtstrahlung aussendenden Sender, einem diese Lichtstrahlung reflektierenden Objekt und einem Empfänger. Aufgrund der hohen Lichtgeschwindigkeit und der gewünschten Genauigkeit der Messung wird heutzutage mit extrem schnellen Verstärkern und bewusst klein gewählten und damit unempfindlicher gewählten Photodioden gearbeitet, die mit einer hohen Frequenz von z.B. wenigstens 100 MHz betrieben werden können.

Aus EP 1913420 B1 ist nun - wie bereits angedeutet - ein Verfahren bekannt, dass das oben beschriebene Problem durch ein System löst, das aus einem ersten getakteten Lichtsignal, das im Wesentlichen zuerst auf das zu messende Objekt und von dort auf den Sensor fällt, und dem besagten zweiten Lichtsignal besteht. Das zweite Lichtsignal ist zu dem ersten Lichtsignal invertiert getaktet und fällt mit bekannter Dämpfung auf den Sensor, aber im Wesentlichen nicht auf das Objekt. Das zweite Lichtsignal wird in der Amplitude und in der Phase so ausgeregelt, dass sich als Ausgangssignal des (Empfangs-) Sensors ein Gleichtaktsignal ergibt, aus dem die Regelsignale für das Kompensationssignal mit dem dort beschriebenen Verfahren extrahiert werden.

Dieses bekannte Verfahren hat dabei den weiteren Nachteil, dass es nur eine mittlere Phasenverschiebung ermittelt. Das bedeutet in der Praxis, dass beispielsweise bei einer Anwendung als Park-Distance-Sensor (Abstandssensor) in einem Automobil, der Sensor nicht in der Lage ist, einen schmalen Pfahl vor einer Wand zu erkennen. Ein Auto würde daher diesen Pfahl rammen. Das System ist also in dieser Form nur bedingt brauchbar.

Dieses Problem wird in der Offenlegungsschrift DE 102007004973 A1 durch Raummultiplex gelöst. Das bedeutet, durch eine Erhöhung der räumlichen Auflösung durch Einschränkung des Bestrahlungswinkels wird die Detektion ermöglicht. DE 102007004973 A1 sieht auch eine dynamische Änderung der Abstrahlrichtung beispielsweise durch Mikrospiegel vor. Der wesentliche Nachteil der dort beschriebenen Methode ist jedoch ihre begrenzte Reichweite. Sie ist also für eine Abstandsmessung z.B. für fahrende Kfz zueinander nicht einsetzbar. Hierzu muss die Sendeleistung der Quelle des ersten getakteten Lichtsignals wesentlich erhöht werden.

Ein weiterer Nachteil der dort beschriebenen Methode ist, dass sie monofrequent ist und lediglich eine Störunterdrückung durch Frequenzhopping vorschlägt. Dies liegt daran, dass die Regelung mittels Phasenschieber erfolgt. Ein Phasenschieber führt zu einer Verzerrung des Signals. Die in EP 1 913 420 B1 und DE 102007004973 A1 offenbarten Systeme arbeiten nur schmalbandig und können für moderne Störunterdrückungsverfahren mit breiteren Signalspektren nicht angewendet werden.

Ausgehend von diesem Stand der Technik liegt der vorliegenden Erfindung die Aufgabe zugrunde, ein Verfahren zur Lichtlaufzeitmessung zu schaffen, das die Vorteile der DE 102007004973 A1 und der EP 1 913 420 B1 durch eine abweichende technische Lösung auf sich vereint. Des Weiteren soll das Verfahren multifrequente Sendesignale verarbeiten können.

Gelöst wird die vorliegende Aufgabe durch ein Verfahren mit den Merkmalen des Anspruchs 1 sowie durch ein Messsystem mit den Merkmalen des Anspruchs 15.

Das erfindungsgemäße Verfahren zur Laufzeitmessung eines Sendesignals durch wenigstens eine erste Übertragungsstrecke eines auf einer rückgekoppelten Kompensation beruhenden Messsystems zwischen wenigstens einem ersten Sender und wenigstens einem Empfänger umfasst folgende Schritte:
Zunächst wird ein Impulssignal mit einer Vielzahl von Impulsen erzeugt. Die Impulse des Impulssignals haben einen minimalen Impulsabstand, der größer ist als die maximal zu erfassende Laufzeit des Sendesignals, bevorzugt mindestens das Doppelte der zu erfassenden Laufzeit beträgt. Besonders bevorzugt ist der Abstand zwischen zwei benachbarten Impulsen mindestens das Dreifache oder das Vierfache der zu erfassenden Laufzeit.

Die Impulsdauer der einzelnen Impulse des Impulssignals ist höchstens ein Viertel des Impulsabstands zweier aufeinander folgender Impulse. Im Rahmen der Erfindung wurde erkannt, dass die Impulsdauer auch größer sein kann, jedoch kleiner als der halbe Impulsabstand sein muss. Dies führt jedoch zu einem System mit geringer Performance und Güte. Je geringer die Impulsdauer im Verhältnis zum Impulsabstand ist, also je schmaler der Impuls ist, desto besser funktioniert das System. Um qualitativ hochwertige Messungen durchzuführen, muss die Impulsdauer deutlich kleiner als der Impulsabstand sein, bevorzugt maximal ein Fünftel des Impulsabstands, sehr bevorzugt maximal ein Zehntel, weiter bevorzugt maximal ein Zwanzigstel, weiter bevorzugt maximal ein Fünfzigstel und besonders bevorzugt maximal ein Hundertstel. Die Impulsdauer ist dabei in der Regel auch kleiner als die maximal zu erfassende Laufzeit des Sendesignals.

Aus den Impulsen des Impulssignals wird das mindestens eine Sendesignal erzeugt, das von mindestens einem ersten Sender in wenigstens eine erste Übertragungsstrecke zu dem Empfänger gesendet wird. Die Übertragungsstrecke weist für das Sendesignal eine erste Laufzeit auf. Dies ist bei z. B. optischen Signalen also die Lichtlaufzeit.

Es wird mindestens ein weiteres Signal als Kompensationssignal von einem zweiten Sender in eine zweite Übertragungsstrecke gesendet, wobei die Übertragungseigenschaften der zweiten Übertragungsstrecke von dem zweiten Sender zum Empfänger bekannt sind, jedenfalls aber bestimmbar. Das Kompensationssignal ist gegenüber dem Sendesignal des ersten Senders regelbar verzögert oder in der Phasenlage verändert. Es umfasst ebenfalls Impulse, deren Impulsdauer und der Impulsabstand mit denen des Sendesignals korrelieren. Dabei ist das Kompensationssignal derart geformt und in der Amplitude ausgeregelt, dass es bei Summenbildung mit dem Sendesignal des ersten Senders ein konstantes Signal an dem wenigstens einen Empfänger bildet. Die ausgesandten Signale, also Sendesignal und Kompensationssignal, überlagern sich an dem Empfänger und werden von ihm beispielsweise als Summensignal empfangen. Aus dem empfangenen Signal wird ein Empfängerausgangssignal gebildet, das die überlagerten Signale umfasst. An dem Empfänger wird dann mindestens eine Laufzeit oder die Veränderung einer Laufzeit des Sendesignals vom ersten Sender zum Empfänger erfasst. Das Sendesignal ist dabei durch Impulse gepulst, weist also eine Vielzahl von Impulsen auf.

Bevorzugt werden die Impulse des Impulssignals zur Erzeugung des Sendesignals mittels eines in einen Impulsgenerator eingespeisten Generatorsignals erzeugt. Das Generatorsignal ist wiederum beispielsweise eine Pulsfolge, etwa aus einem Schieberegister. Durch die Verwendung von kurzen Impulsen und somit durch Verwendung kurzzeitiger gepulster Quellen für das erste Sendesignal lässt sich die Sendeleistung deutlich erhöhen. Dies ermöglicht z. B. eine exakte Abstandsmessung im Nahfeld, also bei Abständen kleiner 1 Meter oder kleiner 30 cm.

Im Rahmen der Erfindung hat sich gezeigt, dass der Impulsabstand, also der Abstand der steigenden Flanken zweier aufeinanderfolgender Impulse deutlich größer sein soll als die Impulsdauer oder Impulsbreite. Selbstverständlich kann der Impulsabstand auch als Abstand der fallenden Flanken zweier Impulse definiert werden. Die Impulsdauer ist die Zeit, in der ein Impuls anliegt, also seine Amplitude von Null verschieden ist. Die Impulsdauer ist also die Spanne zwischen dem Beginn der steigenden Flanke und dem Ende der fallenden Flanke des Impulses.

Die Impulse des Impulssignals und damit des Sendesignals werden bevorzugt derart gewählt, dass der Impulsabstand zweier aufeinanderfolgender Impulse größer als die Impulsdauer ist. Er ist mindestens viermal so groß wie die Impulsdauer, bevorzugt mindestens fünfmal so groß ist. Im Rahmen von Untersuchungen hat sich gezeigt, dass insbesondere für Impulsfolgen und somit Sendesignale deren Impulsabstand mindestens zehnmal so groß, bevorzugt mindestens zwanzigmal so groß und sehr bevorzugt mindestens fünfzigmal so groß ist wie die Impulsdauer sehr gute Ergebnisse in der Erfassung von Gegenständen erzielt werden konnten. Auch größere Impulsabstände im Vergleich zur Impulsdauer haben sich als vorteilhaft gezeigt, beispielsweise ein Impulsabstand, der wenigstens hundertmal größer als die Impulsdauer, bevorzugt wenigstens tausendmal größer als die Impulsdauer ist.

Das Sendesignal ist folglich derart gestaltet, dass der Duty Cycle, also der Tastgrad, höchstens 50 %, bevorzugt höchstens 30 % ist. Dabei ergeben sich besonders gute Messergebnisse für einen Duty Cycle von höchstens 20 %, 10 %, 5 %, 1 %, 0,1 %, 0,01 %, wobei die Bevorzugungen in der vorgegebenen Reihenfolge zunehmen und sich die Performance des Systems in der Regel erhöht. Die Wahl des Duty Cycles hängt von dem Einsatz des Verfahrens ab und ist auf die jeweiligen Anwendungsgebiete abzustimmen. Je nach Auflösungsschärfe des Systems sind entsprechend kleine Duty Cycle zu wählen.

In einer bevorzugten Ausführungsform erfolgt das Erfassen der Laufzeit oder Veränderung der Laufzeit des Sendesignals durch Auswertung wenigstens einer der Flanken wenigstens eines Impulses des Sendesignals. Hierbei können nur die steigende Flanke, nur die fallende Flanke oder beide Flanken ausgewertet werden. Auch ist es möglich, die entsprechenden Flanken mehrerer, bevorzugt aufeinanderfolgender, Signale auszuwerten oder miteinander in Beziehung zu setzen.

Die folgende Beschreibung ist nur ein Beispiel für eine Verkörperung der Erfindung. Bevor die Erfindung im Detail beschrieben wird, ist daher darauf hinzuweisen, dass sie nicht auf jeweiligen Bauteile der Schaltung oder die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung und in den Ansprüchen die Einzahl oder unbestimmte Artikel verwendet werden, bezieht sich dies auch auf die Mehrzahl dieser Elemente, solange nicht der Gesamtzusammenhang eindeutig etwas anderes deutlich macht.

In dem erfindungsgemäßen System wird die Amplitude und Verzögerung gleichzeitig und nicht sequenziell hintereinander gemessen. Die Regelung basiert auf einer Verzögerungsregelung und nicht, wie im Stand der Technik bekannt auf einer Phasenregelung.

Der Grundgedanke der Erfindung ist, dass die Verzögerungsinformation im Wesentlichen nur in den Flanken eines Sendepulses liegt. Das Plateau des Sendepulses zwischen den Flanken ist für die Informationsgewinnung hinsichtlich der Laufzeit des Impulses, insbesondere des Lichtpulses irrelevant. Daher ist die hier investierte Sendeenergie verloren und senkt die Performance des Gesamtsystems.

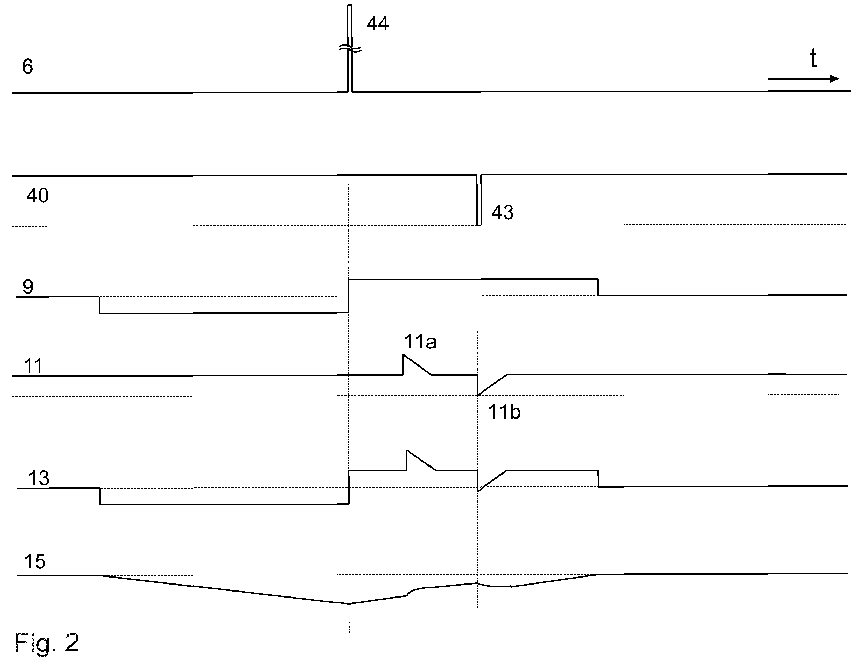

Entgegen den beiden vorgenannten Schriften EP 1913420 B1 und DE 10 2007 004 973 A1 ist es daher zweckmäßig, statt eines mehr oder weniger regelmäßig getakteten Rechtecksignals möglichst kurze, dafür aber umso höhere Pulse (44) (Fig. 2) bei gleicher Energie zu verwenden. Hierdurch wird die Ableitung des Sendepulses und somit die Energie, die auf die Gewinnung der eigentlichen Information verwendet wird, maximiert. Solche Pulse können beispielsweise bequem aus einem digitalen Bit-Strom durch Auswertung der steigenden bzw. fallenden Flanken erzeugt werden.

Das erfindungsgemäße Verfahren zur Bestimmung der Laufzeit ist nicht auf Lichtsignale beschränkt. Es können auch andere Signale verarbeitet werden; beispielsweise kann der magnetische Fluss, ein Schallfeld, ein elektrostatisches Feld oder ein elektrodynamisches Feld zur Auswertung herangezogen werden. Die Sender sind entsprechend den physikalischen Größen anzupassen. Weitere Beispiele für den Einsatz des Verfahrens sind folgende:
Die Sender können beispielsweise einen Lichtfluss oder ein akustisches Signal aussenden. Auch ist es möglich, dass die Sender die Eigenschaften eines zugehörigen Materialflusses oder eines Materieflusses oder einer Fließgeschwindigkeit, wie beispielsweise einer Fließgeschwindigkeit einer Flüssigkeit oder eines Fluids, modellieren. Der Fluss muss dann durch einen geeigneten Empfänger empfangen und/oder weiterverarbeitet werden. So ist dieses Verfahren beispielsweise mit akustischen Signalen anwendbar, wobei der Empfänger ein Mikrofon ist und die beiden Sender jeweils durch einen Lautsprecher dargestellt werden. Bei der Verwendung eines elektrodynamischen Feldes werden als Sender und Empfänger jeweils geeignete, an den Frequenzbereich der EM-Wellen angepasste Antennen verwendet.

Die hier beschriebenen Sendesignale umfassen bevorzugt Licht als Sendesignal. Sie sind jedoch nicht auf optisch sichtbares Licht beschränkt, sondern umfassen insbesondere nicht sichtbare elektromagnetische Strahlung, wie beispielsweise infrarote Strahlung.

Die Erfindung wird nachfolgend anhand von Beispielen näher erläutert. Dazu wird zur Vereinfachung von Lichtsignalen ausgegangen, die durch Sendedioden ausgestrahlt und von einer Photodiode als Empfänger empfangen werden. Die dort beschriebenen expliziten Ausführungen sind jedoch nicht auf Lichtsignale beschränkt. Durch Wahl eines geeigneten Senders können sie auch auf andere Signale, wie oben erläutert, angewendet werden. Andere Konfigurationen der in den Figuren dargestellten Erfindung sind ausdrücklich denkbar. Es zeigen:
- Fig. 1: eine bevorzugte Ausführungsform des erfindungsgemäßen Messsystems zur Laufzeitmessung eines Sendesignals durch eine erste Übertragungsstrecke zwischen einem ersten Sender und einem Empfänger;
- Fig. 2: ein beispielhaftes Zeitdiagramm der Amplitudenregelung für den Fall, dass der negative Impuls eines Steuersignals für ein Kompensationssignal eines Kompensationssenders nach dem Eintreffen des an einem Objekt reflektierten Impulses des Sendesignals liegt;
- Fig. 3: ein beispielhaftes Zeitdiagramm der Verzögerungsregelung für einen gegenüber dem Eintreffen des reflektierten Impulses des Sendesignals nacheilenden negativen Impuls des Steuersignals 40 für das Kompensationssignal 19. Gezeigt ist die Entstehung des Signalanteils 36a am Signal 36, der auf das Steuersignal 32 zurück geht. Das Regelsignal 36 stellt die Summe der Signalanteile 36a und 36b dar;
- Fig. 4: ein beispielhaftes Zeitdiagramm der Verzögerungsregelung für einen gegenüber dem Eintreffen des reflektierten Impulses des Sendesignals 6 nacheilenden negativen Impuls des Steuersignals 40 für das Kompensationssignal. Gezeigt ist die Entstehung des Signalanteils 36b am Signal 36, der auf das Steuersignal 32 zurück geht. Das Regelsignal 36 stellt die Summe der Signalanteile 36a und 36b dar;
- Fig. 5: ein beispielhaftes Zeitdiagramm der Amplitudenregelung für den Fall, dass der negative Impuls des Steuersignals 40 für das Kompensationssignal vor dem Eintreffen des reflektierten Impulses des Sendesignals 6 liegt;
- Fig. 6: ein beispielhaftes Zeitdiagramm der Verzögerungsregelung für einen gegenüber dem Eintreffen des reflektierten Impulses des Sendesignals 6 voreilenden negativen Impuls des Steuersignals 40 für das Kompensationssignal 19. Gezeigt ist die Entstehung des Signalanteils 36a am Signal 36, der auf das Steuersignal 32 zurück geht. Das Regelsignal 36 stellt die Summe der Signalanteile 36a und 36b dar;
- Fig. 7: ein beispielhaftes Zeitdiagramm der Verzögerungsregelung für einen gegenüber dem Eintreffen des reflektierten Impulses des Sendesignals 6 voreilenden negativen Impuls des Steuersignals 40 für das Kompensationssignal 19. Gezeigt ist die Entstehung des Signalanteils 36b am Signal 36, auf das das Steuersignal 32 zurück geht. Das Regelsignal 36 stellt die Summe der Signalanteile 36a und 36b dar;
- Fig. 8: eine weitere bevorzugte Ausführungsform eines Regelkreises des erfindungsgemäßen Messsystems mit weitgehend konstantem DC Arbeitspunkt, und
- Fig.9: ein beispielhaftes Zeitdiagramm der Amplitudenregelung für den Fall, dass der negative Impuls des Steuersignals 40 für das Kompensationssignal nach dem Eintreffen des reflektierten Impulses des Sendesignals liegt und das Steuersignal nur für die Regelung aktiviert ist.

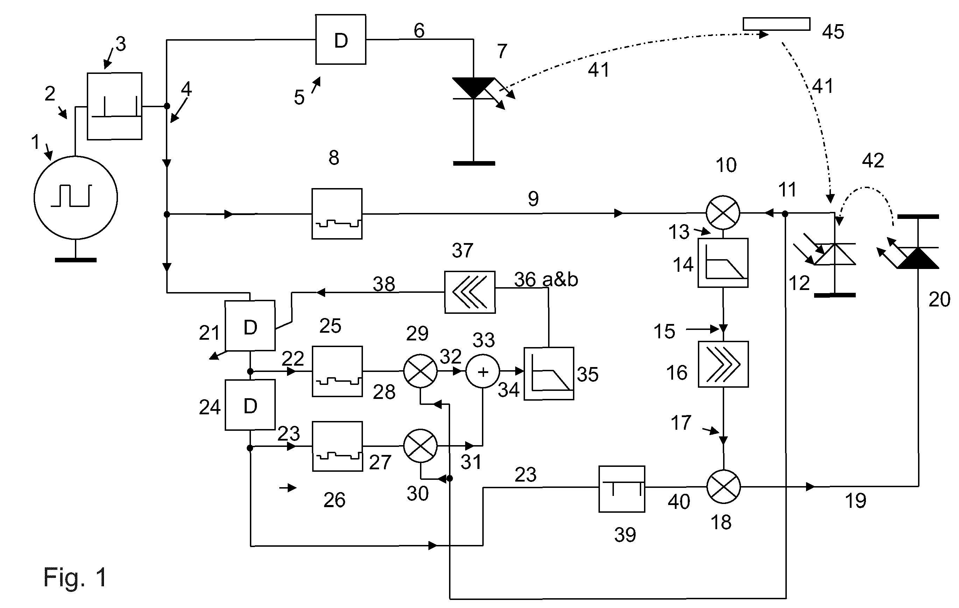

Figur 1 zeigt das erfindungsgemäße Messsystem 100 zur Laufzeitmessung eines Sendesignals 6 durch wenigstens eine erste Übertragungsstrecke 41 des auf einer rückgekoppelten Kompensation beruhenden Messsystems 100 zwischen wenigstens einem ersten Sender 7 und wenigstens einem Empfänger 12. Das Messsystem 100 umfasst den ersten Sender, einen zweiten Sender 20 als Kompensationssender für ein Kompensationssignal 19 und den Empfänger 12.

Dem Empfänger 12 werden beispielsweise Sendesignale 6, 19 von wenigstens dem ersten Sender 7 und dem zweiten Sender 20 über zwei mehr oder weniger getrennte Übertragungsstrecken 41, 42 (Signaltransportstrecken) zugeleitet. Der erste Sender 7 ist dabei beispielsweise eine LED oder eine LASER LED, der zweite Sender 20 ist beispielsweise eine LED. Der Empfänger 12 ist beispielsweise eine Photodiode. Die Distanz des ersten Senders zum Empfänger 12 ist typischerweise wesentlich größer als die Distanz des zweiten Senders 20 zum Empfänger 12. Daher wird das vom ersten Sender 7 abgestrahlte Sendesignal 6 bis zum Empfang durch den Empfänger 12 wesentlich stärker gedämpft, als das vom zweiten Sender 20 abgestrahlte Kompensationssignal 19 durch die zweite Übertragungsstrecke 42 vor dessen Empfang durch den Empfänger 12. Bei der Ausbreitung in der zwischen erstem Sender 7 und Empfänger 12 liegenden ersten Übertragungsstrecke 41 wird das Sendesignal 6 normalerweise mit 1/r² gedämpft. Der erste Sender 7 sendet das Sendesignal 6 beispielsweise zu einem Objekt 45, dessen Entfernung/Reflexion bestimmt werden soll. Im Gegensatz zur Offenbarung EP 1913420 B1 geschieht dies im Falle des ersten Senders 7 nur durch einzelne steile und damit breitbandige Sendepulse 44 des Sendesignals 6 und nicht durch ein mehr oder weniger monofrequentes Rechteck-Signal. Dabei sind die Sende-Pulse 44 so kurz, dass eine Amplituden-Bestimmung bei nachfolgender Phasenbestimmung des reflektierten, empfangenen Signals, mit der Methode wie in EP 1913420 B1 beschrieben, nicht mehr möglich ist. Wie bereits erwähnt, erfordert die Bestimmung einer Phase ein monofrequentes Signal, was bei EMV Problematiken, also bei Einstrahlung aus anderen Quellen, insbesondere anderen Systemen, nicht unproblematisch ist.

Das gepulste und am Objekt reflektierte Sendesignal 6 wird zum Empfänger 12 geleitet. Die Kompensationssignalquelle 20 sendet das modulierte Kompensationssignal 19 aus einem festgelegten Abstand und mit einer vorweg bekannten Übertragungscharakteristik direkt in den Empfänger 12 (via zweiter Übertragungsstrecke 42). Die Empfangssignale der ersten Sendequelle 7 und der zweiten Sendequelle - der Kompensationsquelle 20 - werden spätestens vor dem Empfänger 12 zu einem gemeinsamen Signalstrom summiert und durch den Empfänger 12 in ein gemeinsames Empfangssignal 11 umgewandelt. Es erfolgt dann mittels Amplituden- und Phasenregelung des Kompensationssignals 19 eine Kompensation der Zeiträume, in denen der Empfänger 12 kein Signal von der ersten Signalquelle (Sender 7) empfängt. Es ergibt sich bei idealer Regelung und idealen Verhältnissen ein konstanter Pegel des Empfangssignals am Ausgang des Empfängers 12. Jede Abweichung von diesem stabilen Zielzustand ist eine Signalkomponente des Empfängerausgangssignals 11, die mit dem Sendesignal 6 des ersten Senders 7 korreliert ist.

In EP 1913420 B1 wird das Sendesignal 6 mit dem Ausgangssignal des Empfängers 12 multipliziert. Bei der Verwendung von kurzen Pulsen 44 als Sendesignal 6 ist dies nun nicht möglich, da die Impulsantwort des Systems auf diese Sendepulse 44 (z.B. Fig. 2) gemessen am Ausgang des Empfängers 12 wesentlich später kommt und länger dauert als der Sendepuls 44 selbst dauert oder dauern darf. Diese Impulsantwort ist in Fig. 2 als Puls 11a im Empfängersignal 11 zu erkennen. Eine Multiplikation wie in EP 1913420 B1 vorgeschlagen, würde daher eine konstante Null ergeben. Das System gemäß EP 1913420 B1 funktioniert daher dann nicht.

Stattdessen wird bevorzugt beispielsweise durch einen typischerweise digitalen Signalgenerator 1 ein Generatorsignal 2, das eine Pulsfolge ist, erzeugt. Um einen möglichst großen Störabstand zu anderen Systemen des gleichen Typs herzustellen, ist es beispielsweise sinnvoll, dass der Signalgenerator 1 eine Pseudozufallsfolge oder echte Zufallsfolge erzeugt. Dies kann beispielsweise dadurch sichergestellt werden, dass es sich bei dem Generator 1 um ein rückgekoppeltes Schieberegister handelt, das über ein einfach primitives Polynom zurückgekoppelt ist.

Aus dieser Bit-Folge des Generatorsignals 2 erzeugt nun ein Impulsgenerator 3, der mit dem Generatorsignal 2 gespeist wird und der bevorzugt ein Spike-oder Burst-Generator ist, ein Impulssignal mit einer Folge von Impulsen oder Einzelimpulsen. Die Impulse sind bevorzugt Spikes oder Bursts, so dass das Impulssignal bevorzugt eine Spike-Folge oder ein Burst-Signal ist. Aus der Folge von Impulsen bzw. aus diesem Basis-Spike-Signal oder Basis-Burst-Signal wird das Sendesignal 6 erzeugt. Optional wird dazu ein Verzögerungsglied 5 zusätzlich eingesetzt, wie es in Figur 1 gezeigt ist.

Als Basis-Spike-Signal wird dabei eine Impulsfolge mit mehreren Einzelimpulsen verstanden. Das Basis-Burst-Signal ist eine Folge von Impulspaketen mit Einzelimpulsen. Die Dauer des Burst-Pakets, in dem die Einzelimpulse gruppiert sind, ist die Burst-Dauer; der Abstand zweier Burst-Pakete der Burst-Abstand.

Es wird nun ein (gewichtetes) Torsignal 9 derart erzeugt, dass eine direkte Filterung dieses Signals durch eines der im System verbauten Filter 14, 35 eine Null als Ausgangssignal ergibt. Im Folgenden wird beispielhaft die Verwendung eines Wechselpulssignals als Torsignal 9 diskutiert. Andere Torsignale sind denkbar.

Bevorzugt ist das Torsignal 9 ein Wechselpulssignal mit mehreren Wechselpulsen. Jeder Wechselpuls weist dabei wenigstens eine der folgenden Eigenschaften auf:
1. die Wechselpulse des Torsignals 9 überlappen nicht miteinander;
2. jeder Wechselpuls des Torsignals 9 wird durch Filterung mit dem Filter 14 zu Null;
3. der zeitliche Betragsschwerpunkt t_{w} des Wechselpulses korreliert mit dem Zeitpunkt tᵢₚ eines Impulses des Impulssignals 4 und steht mit diesem in einer definierten zeitlichen Beziehung. Bevorzugt ist die Beziehung derart, dass gilt: t_{w}=tᵢₚ +Δt, wobei Δt eine bekannte oder konstante Zeitdauer darstellt.

Ein Wechsel-Puls-Generator 8 erzeugt auf Basis des gleichen Generatorsignals 2, z. B. der gleichen Puls-Folge, wie der Burstgenerator 3 Wechselpulse mit einer Wechselpuls-Folge als Wechselpulssignal 9. Jeder Wechselpuls besteht beispielsweise immer aus einem negativen Rechteckpuls der unmittelbar von einem positiven Rechteckpuls gefolgt wird. Wenn im Folgenden von der Pulsposition von dermaßen definierten Wechselpulsen gesprochen wird, so ist damit der Zeitpunkt des Wechsels zwischen dem negativen zum positiven Rechteckpuls gemeint. Der positive und negative Rechteckpuls eines Wechselpulses sind so lang und hoch, dass sie sich bei Integration genau aufheben. Damit ist die obige Bedingung für Torsignale 9 erfüllt.

Wichtig ist, dass die Dauer des positiven Rechteckpulsanteils der Wechselpulse stets gleich ist und dass diese Dauer die maximale messbare Verzögerung (Signallaufzeit) festlegt.

Das Wechselpulssignal 9 weist nun an allen den zeitlichen Stellen, an denen das Sendesignal 6 einen oder mehrere schnell aufeinander folgende schmale Impulse 44 wie beispielsweise Spikes bzw. Bursts aufweist, einen Wechselpuls auf, also einen Übergang von einem Puls zu einem invertierten Puls, beispielsweise von einem negativen Puls zu einem positiven Puls (Fig. 2). Das somit erzeugte Wechselpulssignal 9 wird mit dem durch den Empfänger 12 erfassten Empfangssignal 11 in einer Multiplikationseinheit 10 zu einem ersten Zwischensignal 13 multipliziert.

Dieses Zwischensignal 13 wird durch den ersten Tiefpass 14 zu einem DC ähnlichen Signal 15 gefiltert, was dann durch den Verstärker 16 zu einem ersten Regelsignal 17 verstärkt wird. Dieses erste Regelsignal 17 ist ein Maß für die Amplitude des an einem Objekt 45 reflektierten und am Empfänger 12 empfangenen Sendesignals 6. Aufgrund der Multiplikation ist dieses Regelsignal 17 proportional zu solchen Anteilen im Empfangssignal 11, die zum Sendesignal 6 im Rahmen einer maximal möglichen Verzögerung korrelieren.

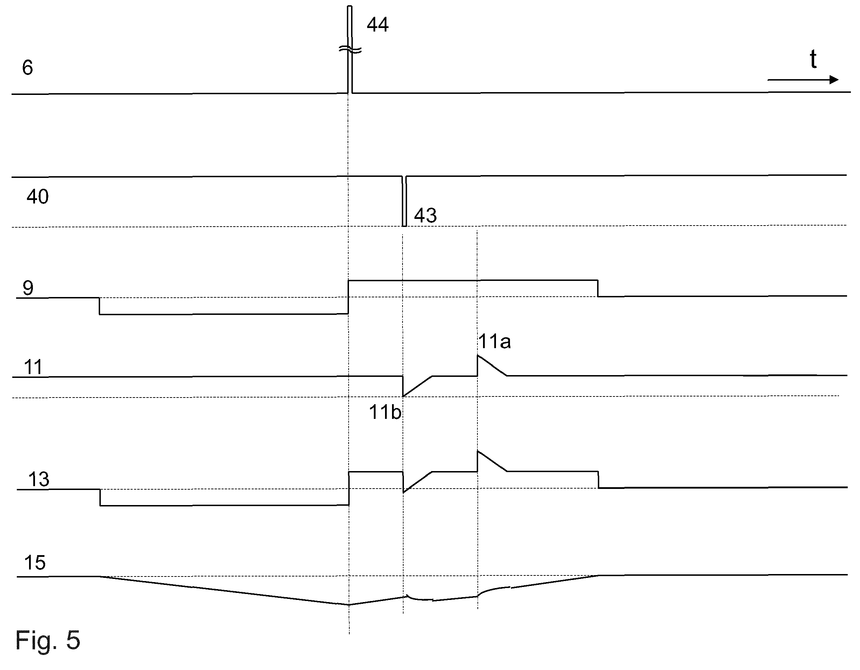

Die Figuren 2 und 5 zeigen jeweils ein Zeitdiagramm der Amplitudenregelung. Figur 2 stellt den Fall dar, dass der negative Impuls eines Steuersignals 40 für das Kompensationssignal 19 des Kompensationssenders 20 nach dem Eintreffen des an einem Objekt reflektierten Impulses 44 des Sendesignals 6 liegt, was als Impuls 11a im Empfängersignals 11 gezeigt ist. Figur 5 stellt ein Zeitdiagramm der Amplitudenregelung für den Fall dar, dass der negative Impuls 43 des Steuersignals 40 für das Kompensationssignal 19, der als Impuls 11 b im Empfängersignal 11 dargestellt ist, vor dem Eintreffen des reflektierten Impulses 11a, der auf dem Sendesignal 6 beruht, liegt.

Ein Steuersignal 40, dessen Erzeugung später beschrieben wird, stellt quasi ein invertiertes Sendesignal 6 dar. Dieses ist gegenüber dem Sendesignal 6 für den ersten Sender 7 verzögert. Wie die besagte Verzögerung geregelt wird, wird ebenfalls später beschrieben.

Dieses invertierte Steuersignal 40 wird in der zweiten Multiplikationseinheit 18 mit dem aus dem ermittelten Verstärkerausgangssignal geformten ersten Regelsignal 17 multipliziert und dem zweiten Sender 20, dem Kompensationssender zugeführt. Durch die große Verstärkung des Verstärkers 16 wird dieses Regelsignal so lange vergrößert bzw. verkleinert, bis der durch das System messbare Signalanteil des Sendesignals 6 am Empfänger 12 in dessen Empfangssignal 11, der durch den Pegel des Signals 15 repräsentiert wird, im zeitlichen Mittel Null ist.

Die Verzögerung des quasi-invertierten Steuersignals 40 gegenüber dem Sendesignal 6 und dem ersten Wechselpulssignal 9 wird durch eine Verzögerungsstufe (Verzögerungselement) 21, die geregelt ist, erzeugt. Die Ermittlung der Regelgröße für die Verzögerungsstufe 21 wird später beschrieben.

Die Verzögerung der zweiten Verzögerungsstufe 24 wird knapp größer als die Zeitkonstante des durch das Tiefpassverhalten des Empfängers 12 definierten Tiefpasses gewählt.

Das bedeutet folgendes: Der durch den Sender 7 emittierte Impuls 44 des Sendesignals 6, beispielsweise Spike oder Burst, erscheint typischerweise als kleines Dreiecksignal 11a im Empfängersignal 11.

Die Verzögerung für die Verzögerungsstufe 24 wird zur Optimierung der Auflösung vorzugsweise so gewählt, dass sie der Breite dieses Signals 11a entspricht.

Aus den durch die Verzögerungsstufen 21, 24 gebildeten beiden aufeinander folgenden Signalen 22, 23 werden mittels zweier Pulsgeneratoren 25, 26 zwei Wechselpulssignale 28, 27 erzeugt und in zwei Multiplizierern 29, 30 mit dem Empfängersignal 11 zu zwei Verzögerungsvorsignalen 32, 31 multipliziert, die zu dem Verzögerungsregelvorsignal 34 in einer Addierstufe 33 zusammensummiert werden. Nach einer integrierenden Filterung in einem Tiefpassfilter 35 bleiben nur die Anteile als Quasi-DC-Signal über, die mit dem vom Generator 1 generierten Muster des Generatorsignals 2 korrelieren. Dieses Steuersignal 36 wird wieder in einem zweiten Verstärker 37 verstärkt und als Verzögerungsregelsignal 38 an den Regeleingang der regelbaren Verzögerungsstufe 21 geführt. Das Steuersignal setzt sich hierbei aus zwei Komponenten (Signalanteile 36a und 36b) addiert zusammen, wobei sich der erste Signalanteil 36a auf das Signal 32 zurückführen lässt und der zweite Signalanteil 36b auf das Signal 31.

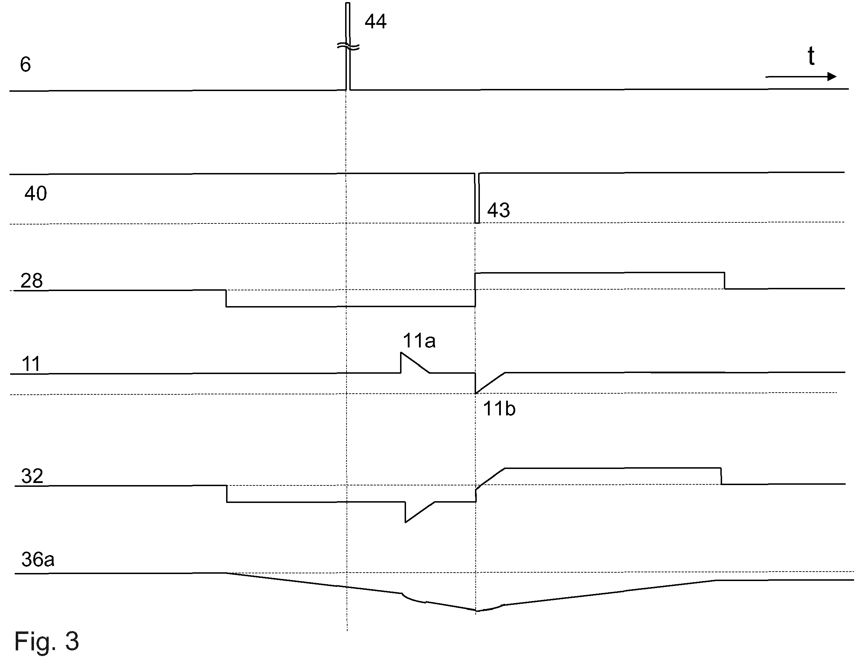

Die Figuren 3, 4, 6, 7 zeigen die Signalanteile 36a und 36b dieses Steuersignals 36 bei unterschiedlichen Verzögerungen des Steuersignals 40 in der Übertragungsstrecke gegenüber dem Sendesignal 6 und damit dem auf dem Sendesignal 6 beruhenden Impuls 11a im Empfangssignal 11.

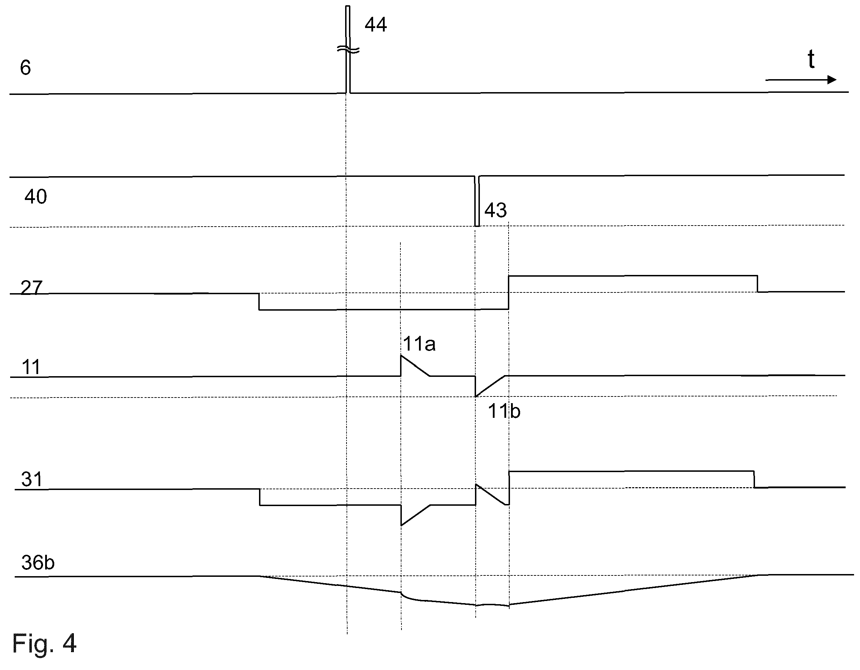

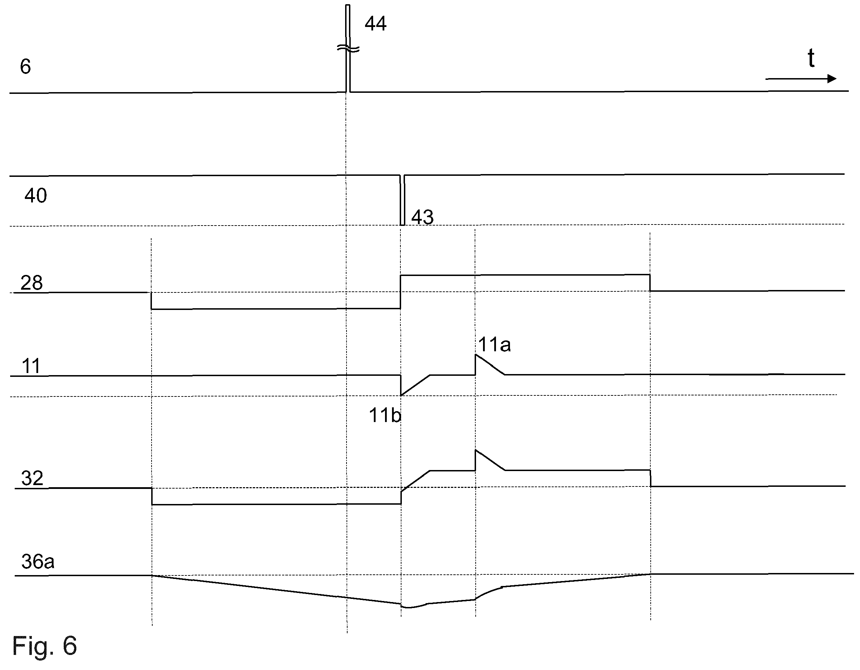

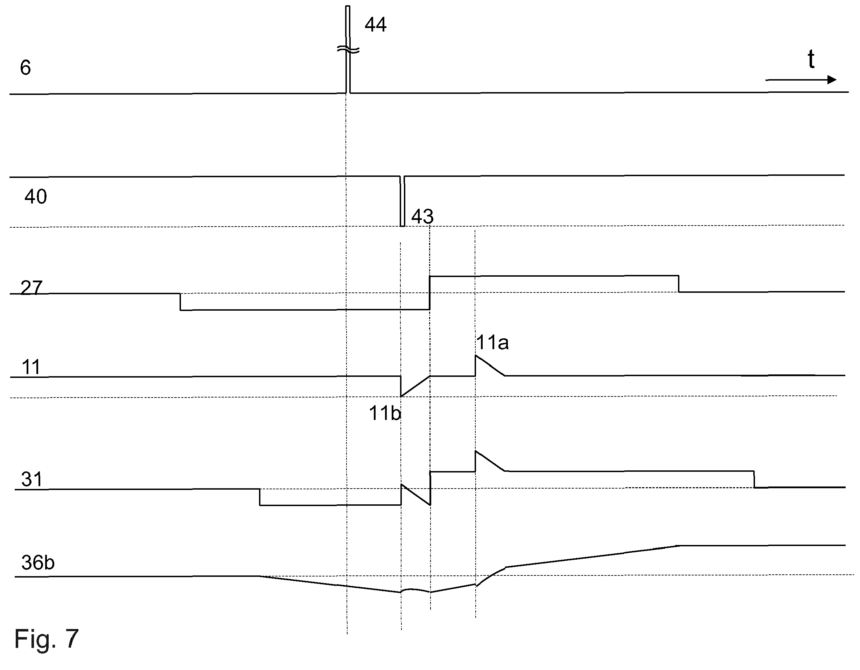

Die Figuren 3 und 6 zeigen den durch den Tiefpass 35 gefilterten Signalanteil des Verzögerungsregelvorsignals 34, der auf das Verzögerungsvorsignal 32 zurückgeht, als Signal 36a. Die Figuren 4 und 7 zeigen den durch den Tiefpass 35 gefilterten Signalanteil des Verzögerungsregelvorsignals 34, der auf das Verzögerungsvorsignal 31 zurückgeht, als Signal 36b.

Das Ausgangssignal 22 der Verzögerungsstrecke 21 wird in einer Inversionseinheit 39 mit -1 multipliziert und mit einem positiven DC Pegel aufsummiert, so dass keine negativen Anteile im Ausgangssignal 40 auftauchen. Durch diese geschlossene Regelschleife stellt sich der Wert des Signals 36 nun so ein, dass der Eintreffzeitpunkt des reflektierten Pulses 44 als Puls 11a am Empfänger 12 irgendwo zwischen dem Zeitpunkt des ersten Wechselsignals 27 und des zweiten Wechselsignals 28 liegt. Eine Bewertung des Pulses 44 erfolgt mittelnd über den Wechselpuls 28 bzw. 27 und ist erst am Ende des Wechselpulses 28, 27 abgeschlossen. Die Mittelung erfolgt durch den Filter 35.

Liegt der Impuls 11a früher als der Impuls des Steuersignals 40, so ist der Signalanteil 36a negativ und der Signalanteil 36b null (Fig. 3 und 4). Somit ist das Signal 36 in diesem Fall negativ. Liegt der Puls 11a zu spät (später als der Puls 43 des Steuersignals 40, der als Impuls 11 b im Empfängersignal 11 dargestellt ist), so ist der Signalanteil 36a null und der Signalanteil 36b positiv (Fig. 6 und 7). Bei entsprechender Polarität des Verstärkers 37 und einer geeigneten Übertragungsfunktion desselben, kann eine stabile Regelung erreicht werden. Das System regelt sich so aus, dass das Signal 36 zu Null wird.

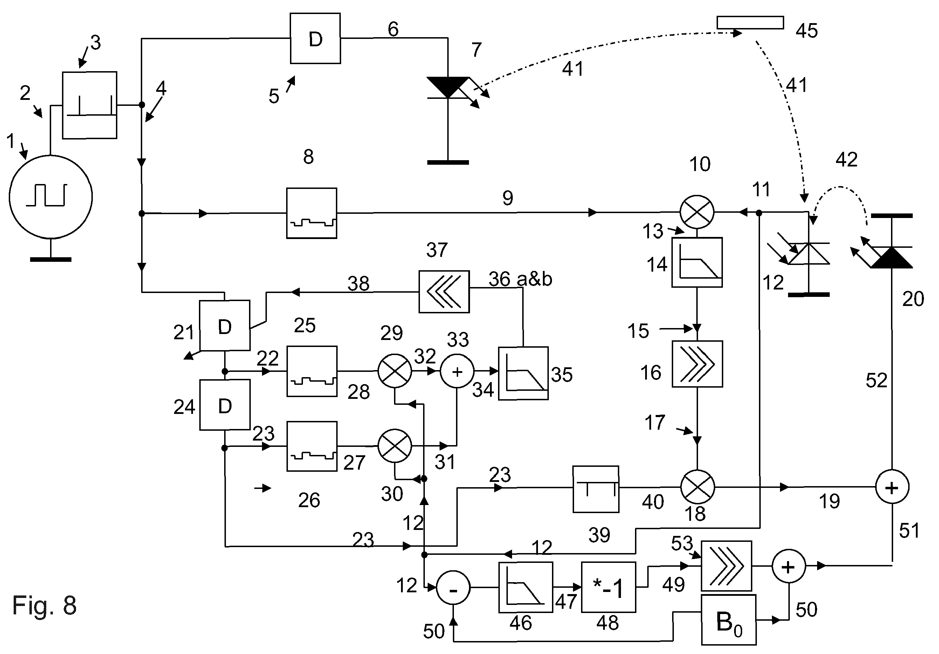

Um eine Blendung (Übersteuerung) des Empfängers 12 und/oder nachfolgender Stufen bei hohen Pulsleistungen des Senders 7 zu vermeiden, ist es zweckmäßig, den DC-Pegel des Empfangssignals 11 am Empfänger 12 stets im gleichen Arbeitspunkt zu halten. Hierfür kann beispielsweise eine gegengekoppelte Regelschleife - wie in Figur 8 skizziert - zusätzlich eingeführt werden.

Hierzu wird zunächst der Bias-Wert B₀ 50 vom Eingangssignal 12 subtrahiert und das so erhaltene Signal durch einen Tiefpass 46 gefiltert. Das so erhaltene Filtersignal 47 wird mittels eines Inverters 48 invertiert und mittels eines Verstärkers 53 verstärkt. Zu dem so erhaltenen Signal 49 wird dann der Bias-Wert B₀ 50 wieder hinzuaddiert und ein Regelsignal 51 erzeugt. Schließlich wird dieses Regelsignal 51 mit dem alten Kompensationssignal 19 zum neuen Kompensationssignal 52 addiert und von dem zweiten Sender 20 gesendet.

Hierdurch ist sichergestellt, dass der DC Pegel am Empfänger 12 immer in etwa gleich ist.

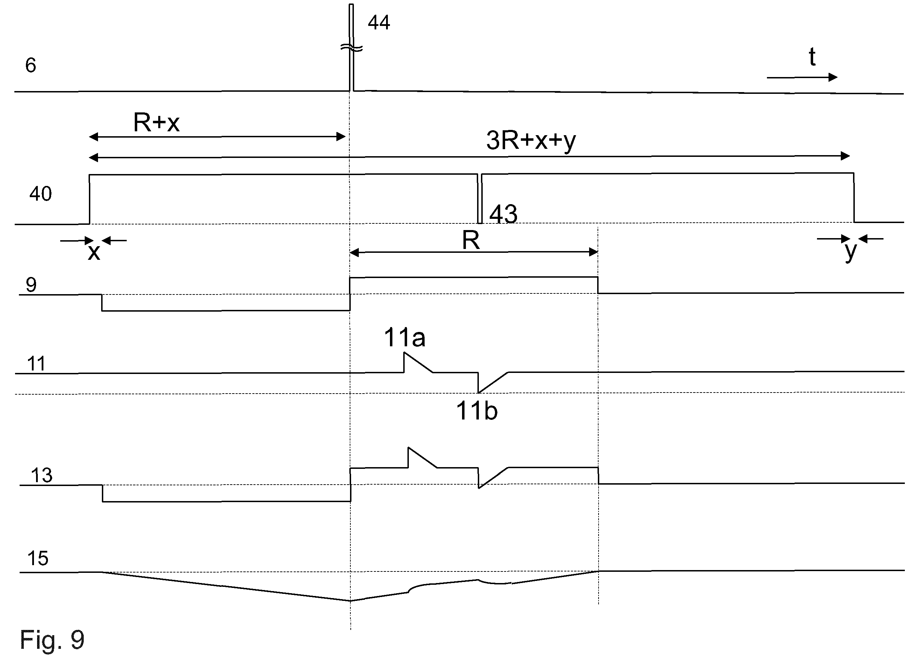

Schließlich sei noch erwähnt, dass das Kompensationssignal 19, 52 nur während der Messung aktiv sein muss. Figur 9 stellt eine Kopie der Figur 2 dar mit dem Unterschied, dass das Steuersignal 40 vor dem Regelvorgang eingeschaltet wird und nach dem Regelvorgang ausgeschaltet wird. Hierdurch wird Sendeleistung gespart. Hat das Regelfenster die Größe R, so wird das Steuersignal 40 zur Zeit R+x vor dem Senden des Sendepulses 44 eingeschaltet. X ist dabei positiv und so gewählt, dass die Regelung stabil ist, wenn das Messfenster bei -R bezogen auf den Sendezeitpunkt für den Sendepuls 44 beginnt.

Das Steuersignal 40 wird zur Zeit Y nach dem Ende des Regelfensters beim Zeitpunkt 2R bezogen auf den Sendezeitpunkt des Sendepulses 44 also beim Zeitpunkt 2R+Y ausgeschaltet. Die hierfür notwendigen Komponenten der Regelung sind zwecks Übersichtlichkeit nicht in Fig. 1 und Fig. 8 eingezeichnet.

In manchen Fällen mag es sinnvoll sein, das Sendesignal 6 mit einer Trägerfrequenz zu modulieren und gleiches mit dem Kompensationssignal durchzuführen, wobei beim Kompensationssignal sowohl die 1-Phase als auch alternativ die 0-Phase moduliert werden kann. Hierdurch erhält man einen Sendeund Kompensationsburst. Aus diesem Grund werden in der Beschreibung der Erfindung und insbesondere in den Ansprüchen nicht nur Sendepulse oder Impulse sondern auch Bursts als eine besondere Form der Sendepulse beschrieben.

## Patentansprüche

1. Verfahren zur Laufzeitmessung eines Sendesignals (6) durch wenigstens eine erste Übertragungsstrecke eines auf einer rückgekoppelten Kompensation beruhenden Messsystems (100) zwischen wenigstens einem ersten Sender (7) und wenigstens einem Empfänger (12), mit den Schritten:
- Senden des mindestens einen Sendesignals (6) von dem mindestens einen ersten Sender (7) in die wenigstens eine erste Übertragungsstrecke (41) mit mindestens einer ersten Laufzeit an den wenigstens einen Empfänger (12);
- Senden mindestens eines weiteren Signals als Kompensationssignal (19) von einem zweiten Sender (20) in eine zweite Übertragungsstrecke (42);
- wobei die Übertragungseigenschaften der zweiten Übertragungsstrecke (42) vom zweiten Sender (20) zum Empfänger (12) bekannt sind;
- Empfangen der sich wenigstens an dem Empfänger (12) überlagernden Sendesignale (6) und Kompensationssignale (19) mittels des wenigstens einen Empfängers (12);
- Bilden eines Empfängerausgangssignals (11) aus den überlagerten Signalen (6, 19);
**gekennzeichnet durch** die Schritte
- Erzeugen eines Impulssignals (4) mit Impulsen mit einem Impulsabstand, wobei der Impulsabstand mindestens das Doppelte der maximal zu erfassenden Laufzeit des Sendesignals (6) beträgt und die Impulsdauer des Impulses höchstens ein Viertel des Impulsabstands ist;
- Erzeugen des mindestens einen Sendesignals (6) **durch** die erzeugten Impulse des Impulssignals (4);
- Erzeugen mindestens eines ersten Torsignals (9) aus dem Impulssignal (4);
- Multiplizieren des Torsignals (9) mit dem Empfängerausgangssignal (11) zur Erzeugung eines Zwischensignals (13), das als Regelsignal für den zweiten Sender (20) verwendet wird;- wobei das Kompensationssignal (19) gegenüber dem Sendesignal (6) des ersten Senders (7) regelbar verzögert oder in der Phasenlage verändert ist;
- wobei das Kompensationssignal (19) derart geformt und in der Amplitude ausgeregelt ist, dass es bei Summenbildung mit dem Sendesignal (6) des ersten Senders (7) ein Konstantsignal (11) an dem wenigstens einen Empfänger (12) bildet und
- wobei an dem wenigstens einen Empfänger (12) mindestens eine Laufzeit oder Veränderung der Laufzeit des mindestens einen **durch** die Impulse gepulsten Sendesignals (6) vom ersten Sender (7) zu dem wenigstens einen Empfänger (12) erfasst wird.

2. Verfahren nach Anspruch 1, **dadurch gekennzeichnet, dass** die Impulse des Impulssignals (4) Spikes oder Bursts sind.

3. Verfahren nach einem der vorhergehenden Ansprüche, **dadurch gekennzeichnet, dass** der minimale Impulsabstand zwischen zwei Impulsen mindestens das Dreifache der zu erfassenden Laufzeit ist.

4. Verfahren nach einem der vorhergehenden Ansprüche, **dadurch gekennzeichnet, dass** die Impulsdauer kleiner als die Zeitkonstante eines Tiefpasses erster Ordnung ist, der das zeitliche Verhalten des langsamsten verwendeten Empfängers (12) approximiert.

5. Verfahren nach einem der vorhergehenden Ansprüche, **dadurch gekennzeichnet, dass** der Impulsabstand zweier aufeinander folgender Impulse des Sendesignals mindestens fünfmal so groß ist wie die Impulsdauer, bevorzugt mindestens zehnmal so groß, weiter bevorzugt mindestens 20 mal so groß und besonders bevorzugt mindestens 50 mal so groß ist.

6. Verfahren nach einem der vorhergehenden Ansprüche, **dadurch gekennzeichnet, dass** das Erfassen der Laufzeit oder Veränderung der Laufzeit des Sendesignals (6) durch Auswertung wenigstens einer der Flanken wenigstens eines Impulses des Sendesignals (6) an dem wenigstens einen Empfänger (12) erfolgt.

7. Verfahren nach einem der vorhergehenden Ansprüche, **dadurch gekennzeichnet, dass** Amplitude und Verzögerung oder Phase eines Signalanteils des aus dem Sendesignal (6) und dem Kompensationssignal (19) resultierenden Summensignals, der mit dem Sendesignal (6) des ersten Senders (7) zeitlich und hinsichtlich der Amplitude korreliert ist, in mindestens einem resultierenden Empfängerausgangssignal (11) mindestens eines Empfängers (12) gleichzeitig erfasst und durch Veränderung des Kompensationssignals (19) über mindestens einen der zweiten Sender (20) geregelt werden.

8. Verfahren nach einem der vorgehenden Ansprüche, **gekennzeichnet durch** den weiteren Schritt:
- Filtern des Zwischensignals (13) mit dem Filter (14).

9. Verfahren nach Anspruch 8, **dadurch gekennzeichnet ist, dass** das Torsignal (9) ein Wechselpulssignal mit mehreren Wechselpulsen ist, wobei jeder Wechselpuls wenigstens eine der folgenden Eigenschaften aufweist:
- die Wechselpulses des Torsignals (9) überlappen nicht miteinander;
- jeder Wechselpuls des Torsignals (9) wird durch Filterung mit dem Filter (14) zu Null;
- der zeitliche Betragsschwerpunkt t_{w} des Wechselpulses korreliert mit dem Zeitpunkt tᵢₚ eines Impulses des Impulssignals (4) und steht mit diesem in einer definierten zeitlichen Beziehung

10. Verfahren nach Anspruch 8 oder 9, **dadurch gekennzeichnet, dass** das Torsignal (9) zur Ermittlung eines Regelsignals (17), insbesondere für den zweiten Sender (20) verwendet wird.

11. Verfahren nach einem der vorgehenden Ansprüche, **gekennzeichnet durch** die Schritte:
- Erzeugen eines zweiten Torsignals (28, 27) derart, dass dessen Filterung mit einem Filter (35) Null ergibt;
- Multiplizieren des Torsignals (28, 27) mit dem Empfängersignal (11);
- Bilden eines Verzögerungsvorsignals (31, 32);
- Bilden eines Verzögerungsregelsignals (38) **durch** Filterung des Verzögerungsvorsignals (31, 32) mittels des Filters (35).

12. Verfahren nach Anspruch 11, **dadurch gekennzeichnet, dass** das Torsignal (28, 27) zur Regelung einer Verzögerung (21) verwendet wird.

13. Verfahren nach einem der vorhergehenden Ansprüche, **dadurch gekennzeichnet, dass** das Impulssignal (4) ein Burst oder wenigstens ein Spike oder eine zeitliche Abfolge derselben ist, wobei die Impulslänge kürzer als das Doppelte der Zeitkonstanten eines Tiefpasses erster Ordnung ist, der das zeitliche Verhalten des langsamsten verwendeten Empfängers (12) approximiert.

14. Verfahren nach einem der vorhergehenden Ansprüche **dadurch gekennzeichnet, dass** mindestens ein Paar der Sender (7, 20) einen magnetschen Fluss oder ein elektrostatisches oder elektrodynamisches Feld oder einen Lichtfluss oder ein akustisches Signal aussenden oder die Eigenschaften eines zugehörigen Material- oder Materieflusses oder einer Fließgeschwindigkeit, bevorzugt einer Flüssigkeit oder eines Fluids, modulieren und dass dieser bevorzugt durch mindestens einen Empfänger (12) empfangen und/oder weiterverarbeitet wird.

15. Messsystem zur Laufzeitmessung eines Sendesignal (6) durch wenigstens eine erste Übertragungsstrecke des auf einer rückgekoppelten Kompensation beruhenden Messsystems (100) zwischen wenigstens einem ersten Sender (7) und wenigstens einem Empfänger (12), umfassend den ersten Sender (7), einen zweiten Sender (20) und den Empfänger (12) **dadurch gekennzeichnet, dass** das Messsystem (100) einen Impulsgenerator für die Erzeugung von Impulsen für das Sendesignal (6), einen Generator zur Erzeugung eines Torsignals (9), eines Mischers (10) zum Mischen des Torsignals (9) mit einem Empfängerausgangssignals (11) und einen Filter umfasst und das Messsystem (100) dazu eingerichtet und ausgebildet ist, das Verfahren nach einem der vorhergehenden Ansprüche auszuführen.

## Claims

1. Method for measuring the propagation time of a transmission signal (6) through at least one first transmission path of a measuring system (100), which is based on feedback compensation, between at least one first transmitter (7) and at least one receiver (12), comprising the following steps:
- transmitting the at least one transmission signal (6) from the at least one first transmitter (7) into the at least one first transmission path (41) with at least one first propagation time to the at least one receiver (12);
- transmitting at least one further signal as compensation signal (19) from a second transmitter (20) into a second transmission path (42);
- wherein the transmission properties of the second transmission path (42) from the second transmitter (20) to the receiver (12) are known;
- receiving the transmission signals (6) and compensation signals (19) which are superimposed at least at the receiver (12) by means of the at least one receiver (12);
- forming a receiver output signal (11) from the superimposed signals (6, 19);
**characterised by** the steps
- generating a pulse signal (4) having pulses with a pulse spacing, wherein the pulse spacing is at least twice the maximum propagation time of the transmission signal (6) to be recorded and the pulse duration of the pulse is at most one quarter of the pulse spacing;
- generating the at least one transmission signal (6) using the generated pulses of the pulse signal (4);
- generating at least one first gate signal (9) from the pulse signal (4);
- multiplying the gate signal (9) by the receiver output signal (11) for generating an intermediate signal (13), which is used as a control signal for the second transmitter (20);
- wherein the compensation signal (19) is delayed in a controllable manner or changed in its phase angle with respect to the transmission signal (6) of the first transmitter (7);
- wherein the compensation signal (19) is shaped and the amplitude thereof is adjusted such that the compensation signal (19) forms a constant signal (11) at the at least one receiver (12) during summation with the transmission signal (6) of the first transmitter (7), and
- wherein at least one propagation time or change in propagation time of the at least one transmission signal (6), pulsed by the pulses, from the first transmitter (7) to the at least one receiver (12) is recorded at the at least one receiver (12).

2. Method according to claim 1, **characterised in that** the pulses of the pulse signal (4) are spikes or bursts.

3. Method according to any one of the preceding claims, **characterised in that** the minimum pulse spacing between two pulses is at least three times the propagation time to be recorded.

4. Method according to any one of the preceding claims, **characterised in that** the pulse duration is less than the time constant of a low-pass filter of the first order, which approximates the temporal behaviour of the slowest receiver (12) used.

5. Method according to any one of the preceding claims, **characterised in that** the pulse spacing of two succeeding pulses of the transmission signal is at least five times as long as the pulse duration, preferably at least ten times as long, further preferably at least 20 times as long and particularly preferably at least 50 times as long.

6. Method according to any one of the preceding claims, **characterised in that** the recording of the propagation time or change in propagation time of the transmission signal (6) is effected by evaluating at least one of the flanks of at least one pulse of the transmission signal (6) at the at least one receiver (12).

7. Method according to any one of the preceding claims, **characterised in that** the amplitude and delay or phase of a signal part of the sum signal resulting from the transmission signal (6) and the compensation signal (19) are recorded in at least one resulting receiver output signal (11) of at least one receiver (12) and are simultaneously controlled via at least one of the second transmitters (20) by means of a change in the compensation signal (19), wherein the signal part is correlated with the transmission signal (6) of the first transmitter (7) with regard to time and amplitude.

8. Method according to any one of the preceding claims, **characterised by** the further step:
- filtering of the intermediate signal (13) by the filter (14).

9. Method according to claim 8, **characterised in that** the gate signal (9) is an alternating pulse signal with several alternating pulses, wherein each alternating pulse has at least one of the following characteristics:
- the alternating pulses of the gate signal (9) do not overlap;
- each alternating pulse of the gate signal (9) becomes zero when filtered by the filter (14);
- the temporal absolute value of the centroid t_{w} of the alternating pulse correlates with the instant of time tᵢₚ of a pulse of the pulse signal (4) and relates to it in a defined temporal relation.

10. Method according to claim 8 or 9, **characterised in that** the gate signal (9) is used for determining a control signal (17), in particular for the second transmitter (20).

11. Method according to any one of the preceding claims, **characterised by** the steps:
- generating a second gate signal (28, 27) in such a way that it becomes zero when it is filtered by a filter (35);
- multiplying the gate signal (28, 27) by the receiver signal (11);
- generating a delaying presignal (31, 32);
- generating a delaying control signal (38) by filtering the delaying presignal (31,32) by means of the filter (35).

12. Method according to claim 11, **characterised in that** the gate signal (28, 27) is used for controlling a delay (21).

13. Method according to any one of the preceding claims, **characterised in that** the pulse signal (4) is a burst or at least a spike or a sequence of same, wherein the pulse length is shorter than twice the time constants of a low-pass filter of the first order, which approximates the temporal behaviour of the slowest receiver (12) used.

14. Method according to any one of the preceding claims, **characterised in that** at least one pair of transmitters (7, 20) emits a magnetic flux or an electrostatic or electrodynamic field or a light flow or an acoustic signal, or modulates the characteristics of a corresponding material or material flow or a flow rate, preferably of a liquid or a fluid, and that same is preferably received and/or processed by at least one receiver (12).

15. Measuring system for measuring the propagation time of a transmission signal (6) through at least one first transmission path of a measuring system (100), which is based on feedback compensation, between at least one first transmitter (7) and at least one receiver (12), comprising the first transmitter (7), a second transmitter (20) and the receiver (12), **characterised in that** the measuring system (100) comprises a pulse generator for generating pulses for the transmission signal (6), a generator for generating a gate signal (9), a mixer (10) for mixing the gate signal (9) with a receiver output signal (11) and a filter, and **in that** the measuring system (100) is arranged and designed for executing the method according to any one of the preceding claims.

## Revendications

1. Procédé pour la mesure du temps de parcours d'un signal émis (6) à travers au moins une première section de transmission d'un système de mesure (100) reposant sur une compensation rétroactive entre au moins un premier émetteur (7) et au moins un récepteur (12), comprenant les étapes suivantes:
- émission dudit au moins un signal émis (6) par ledit au moins un premier émetteur (7) dans ladite au moins une première section de transmission (41) avec au moins une première durée de parcours audit au moins un récepteur (12);
- émission d'au moins un autre signal comme signal de compensation (19) par un deuxième émetteur (20) dans une deuxième section de transmission (42);
- dans lequel les propriétés de transmission de la deuxième section de transmission (42) du deuxième émetteur (20) au récepteur (12) sont connues;
- réception des signaux émis (6) et des signaux de compensation (19) se superposant au moins au récepteur (12) au moyen dudit au moins un récepteur (12);
- formation d'un signal de sortie de récepteur (11) à partir des signaux superposés (6, 19);
**caractérisé par** les étapes suivantes:
- production d'un signal d'impulsions (4) avec des impulsions avec un intervalle d'impulsion, dans lequel l'intervalle d'impulsion vaut au moins le double de la durée de parcours maximale à détecter du signal émis (6) et la durée d'impulsion de l'impulsion est au maximum le quart de l'intervalle d'impulsion;
- production dudit au moins un signal émis (6) par les impulsions produites du signal d'impulsions (4);
- production d'au moins un premier signal TOR (9) à partir du signal d'impulsions (4);
- multiplication du signal TOR (9) par le signal de sortie de récepteur (11) pour la production d'un signal intermédiaire (13), que l'on utilise comme signal de réglage pour le deuxième émetteur (20);
- dans lequel le signal de compensation (19) est retardé de façon réglable par rapport au signal émis (6) du premier émetteur (7) ou sa position de phase est changée;
- dans lequel le signal de compensation (19) est formé et régulé en amplitude de telle manière que, lors de la sommation avec le signal émis (6) du premier émetteur (7), il forme un signal constant (11) audit au moins un récepteur (12), et
- dans lequel on détecte audit au moins un récepteur (12) au moins un temps de parcours ou un changement du temps de parcours dudit au moins un signal émis (6) pulsé par les impulsions depuis le premier émetteur (7) jusqu'audit au moins un récepteur (12).

2. Procédé selon la revendication 1, **caractérisé en ce que** les impulsions du signal d'impulsions (4) sont des pointes ou des salves.

3. Procédé selon l'une quelconque des revendications précédentes, **caractérisé en ce que** l'intervalle d'impulsion minimal entre deux impulsions vaut au moins le triple du temps de parcours à détecter.

4. Procédé selon l'une quelconque des revendications précédentes, **caractérisé en ce que** la durée d'impulsion est inférieure à la constante de temps d'un filtre passe-bas du premier ordre, qui s'approche du comportement temporel du récepteur le plus lent utilisé (12).

5. Procédé selon l'une quelconque des revendications précédentes, **caractérisé en ce que** l'intervalle d'impulsion de deux impulsions successives du signal émis est au moins cinq fois plus grand que la durée d'impulsion, de préférence au moins dix fois plus grand, et de préférence encore au moins 20 fois plus grand et de préférence particulière encore au moins 50 fois plus grand.

6. Procédé selon l'une quelconque des revendications précédentes, **caractérisé en ce que** l'on effectue la détection du temps de parcours ou du changement du temps de parcours du signal émis (6) par l'analyse d'au moins un des flancs d'au moins une impulsion du signal émis (6) audit au moins un récepteur (12).

7. Procédé selon l'une quelconque des revendications précédentes, **caractérisé en ce que** l'on détecte simultanément l'amplitude et le retard ou la phase d'une partie de signal du signal de somme résultant du signal émis (6) et du signal de compensation (19), qui est corrélée avec le signal émis (6) du premier émetteur (7) temporellement et en ce qui concerne l'amplitude, dans au moins un signal de sortie de récepteur résultant (11) d'au moins un récepteur (12) et on les règle en faisant varier le signal de compensation (19) au moyen d'au moins un des deux émetteurs (20).

8. Procédé selon l'une quelconque des revendications précédentes, **caractérisé par** l'étape supplémentaire:
- filtrage du signal intermédiaire (13) avec le filtre (14).

9. Procédé selon la revendication 8, **caractérisé en ce que** le signal TOR (9) est un signal puisé alternatif avec plusieurs impulsions alternatives, dans lequel chaque impulsion alternative présente au moins une des propriétés suivantes:
- les impulsions alternatives du signal TOR (9) ne se chevauchent pas l'une l'autre;
- chaque impulsion alternative du signal TOR (9) est filtrée à zéro par filtrage avec le filtre (14);
- le centre de gravité temporel t_{w} de l'impulsion alternative est corrélé avec l'instant tᵢₚ d'une impulsion du signal d'impulsions (4) et se trouve dans une relation temporelle définie avec celui-ci.

10. Procédé selon la revendication 8 ou 9, **caractérisé en ce que** l'on utilise le signal TOR (9) pour la détermination d'un signal de réglage (17), en particulier pour le deuxième émetteur (20).

11. Procédé selon l'une quelconque des revendications précédentes, **caractérisé par** les étapes suivantes:
- production d'un deuxième signal TOR (28, 27), de telle manière que son filtrage dans un filtre (35) donne zéro;
- multiplication du signal TOR (28, 27) par le signal de récepteur (11);
- formation d'un présignal de retard (31, 32);
- formation d'un signal de réglage de retard (38) par filtrage du présignal de retard (31, 32) au moyen du filtre (35).

12. Procédé selon la revendication 11, **caractérisé en ce que** l'on utilise le signal TOR (28, 27) pour la régulation d'un retard (21).

13. Procédé selon l'une quelconque des revendications précédentes, **caractérisé en ce que** le signal d'impulsions (4) est une salve ou au moins une pointe ou une succession temporelle de celles-ci, dans lequel la longueur d'impulsion est plus courte que le double de la constante de temps d'un filtre passe-bas du premier ordre, qui s'approche du comportement temporel du récepteur le plus lent utilisé (12).

14. Procédé selon l'une quelconque des revendications précédentes, **caractérisé en ce qu'**au moins une paire des émetteurs (7, 20) émettent un flux magnétique ou un champ électrostatique ou électrodynamique ou un flux lumineux ou un signal acoustique ou modulent les propriétés d'un flux de matériau ou de matière correspondant ou d'une vitesse d'écoulement, de préférence d'un liquide ou d'un fluide, et **en ce que** celui-ci est de préférence reçu et/ou traité par au moins un récepteur (12).

15. Système de mesure pour la mesure du temps de parcours d'un signal émis (6) à travers au moins une première section de transmission du système de mesure (100) reposant sur une compensation rétroactive entre au moins un premier émetteur (7) et au moins un récepteur (12), comprenant le premier émetteur (7), un deuxième émetteur (20) et le récepteur (12), **caractérisé en ce que** le système de mesure (100) comprend un générateur d'impulsions pour la production d'impulsions pour le signal émis (6), un générateur pour la production d'un signal TOR (9), un mélangeur (10) pour mélanger le signal TOR (9) avec le signal de sortie de récepteur (11) et un filtre, et **en ce que** le système de mesure (100) est conçu et configuré pour mettre en oeuvre le procédé selon l'une quelconque des revendications précédentes.
